# EUROPÄISCHE PATENTSCHRIFT

(11) **EP 1 104 079 B1**
(45) Veröffentlichungstag und Bekanntmachung des Hinweises auf die Patenterteilung: **02.02.2005**
(21) Anmeldenummer: 00125484.6
(22) Anmeldetag: 21.11.2000
(51) Int. Cl.: H02K 5/22, H02K 11/04

(54) **Elektromotor für insbesondere eine Kreiselpumpe**
Electric motor, in particular for a centrifugal pump
Moteur électrique, en particulier pour une pompe centrifuge

(30) Priorität: 24.11.1999 DE 19956429
(43) Veröffentlichungstag der Anmeldung: 30.05.2001
(73) Patentinhaber: GRUNDFOS A/S, DK-8850 Bjerringbro (DK)
(72) Erfinder: Danielsen, Carl-Christian, DK-8550 Ryomgard (DK); Kimer, Jorgen, DK-8660 Skanderborg (DK)
(74) Vertreter: Vollmann, Heiko, Dipl.-Ing.

(56) Entgegenhaltungen:
- EP-A- 0 661 793
- EP-A- 0 951 131
- DE-A- 19 704 226
- DE-A- 19 824 342
- US-A- 5 763 969

## Beschreibung

Die Erfindung geht aus von einem Elektromotor der insbesondere für eine Kreiselpumpe für eine Heizungsanlage verwendet wird, gemäß dem Oberbegriff des Anspruchs A1.

Ein derartiger Elektromotor ist aus der DE 36 42 724 C2 und aus der US-Patentschrift 5 763 969 bekannt. Darin sind ein eine Kreiselpumpe antreibender Elektromotor mit einem Klemmenkasten, in dem ein Frequenzumrichter mit einer Leistungselektronik enthalten ist, und mit einem Lüfter, der Kühlluft axial über das Gehäuse des Motors bläst, beschrieben. Der Boden des Klemmenkastens ist zum Motor hin mit einem gewissen Abstand angeordnet. Die Kühlluft strömt auch zwischen dem Motor entlang dessen axialer Kühlrippen und dem Klemmenkasten bzw. zwischen dem Motor und dem Klemmenkasten, dessen dem Motor zugekehrte Unterseite mit axialen Rippen, von denen einige in Motorlängsrichtung geringfügig geneigt verlaufen, versehen ist, hindurch. Der Boden des Klemmenkastens steht wärmeleitend mit einer Trägerplatte in Verbindung, auf der sich wiederum die Leistungselektronik des Frequenzumrichters befindet, so dass diese Elektronik mittels der unter dem Klemmenkasten hindurch strömenden Kühlluft wirksam gekühlt wird. Zwar hat sich die Zwangskühlung des Klemmenkastens als effektiv erwiesen, jedoch ist sie mit dem Nachteil verbunden, dass hierzu mit dem Vorsehen eines Lüfterrades und von Luftleitmitteln ein erheblicher Bauund Kostenaufwand erforderlich ist. Da außerdem der Lüfterbetrieb einen gewissen Anteil der Motorleistung verbraucht, ist der Wirkungsgrad für die Antriebsleistung des Laufrades der Kreiselpumpe gemindert. Außerdem muss die das Lüfterrad tragende Motorwelle zum Lüfterrad hin abgedichtet sein.

Aus der DE 40 15 080 C2 ist ein weiteres Kreiselpumpenaggregat bekannt. Dieses Aggregat umfasst nach einer Ausführungsform einen innen zwangsgekühlten Elektromotor in Form eines Nasslaufmotors, d.h. die Verlustwärme des Motors wird in bekannter Weise durch ein durch den Motor hindurch geleiteten Anteil des Förderstromes abgeführt. Das Gehäuse des Motors, der bei dieser Ausführungsform keinen Lüfter aufweist, weist auf seiner Außenseite eine Planfläche auf, auf der ein unten offener Klemmenkasten angeschraubt ist. Innerhalb des Klemmenkostens befindet sich auf dem übrigen Teil der Planfläche eine wärmeleitende Trägerplatte, die mit der Leistungselektronik eines in dem Klemmenkasten vorgesehenen Frequenzumrichters versehen ist. Der Wandbereich des Motorgehäuses, der die Planfläche aufweist, bildet so eine Wärmesenke, über die die Verlustwärme der Leistungselektronik des Frequenzumrichters innerhalb des Elektromotors abgeführt wird. Mit einer solchen Kühlungsausbildung wird im Wesentlichen die Kühlung der Leistungselektronik erreicht, nicht jedoch eine Wärmekühlung des übrigen Klemmenkastens, da ein Lüfter nicht vorgesehen ist und eine sonstige Luftkühlung in ihrer Kühlungswirkung nicht zufrieden stellend ist.

Einen ähnlichen Elektromotor mit Klemmenkosten zeigt die EP-A2-0951131. Das Motorgehäuse dieses Motors ist doppelwandig ausgeführt, und zwischen den beiden Wänden dieses Gehäuses zirkuliert ein Wasserkühlstrom, der haupfisächlich den eigentlichen Motor kühlt. Die Doppelwand des Gehäuses weist an einem Umfangsbereich, in dem der Klemmenkasten vorgesehen ist, eine Aussparung auf, in die ein Kühleinlegeteil eingesetzt ist. Dieses Kühleinlegeteil trägt einerseits die wörmeerzeugende Leistungselektronik des Klemmenkastens und ist andererseits dem Wasserkühlstrom der Doppelwandung des Motorsgehäuses ausgesetzt, wozu das Kühleinlegeteil eine Rautenprofilierung aufweist, die ebenfalls Kühlwasser führt, welches von dem Kühlwasser des Doppelmantels abgezweigt wird. Die Leistungselektronik des Klemmenkastens wird so durch eine erzwungene Wasserkühlung gekühlt,

In der DE 197 04 226 ist ein weiterer Elektromotor beschrieben, der ebenfalls mittels eines üblichen Lüfters und Kühlluft zwangsgekühlt ist. An einem Umfangsbereich des Motorgehäuses ist ein Anschlussklemmen enthaltender Zwischenkasten montiert, auf dessen dem Motorgehäuse abgekehrter Oberseite ein Frequenzumrichter vorgesehen ist, der mittels einer thermischen lsolierschicht gegenüber dem Zwischenkasten thermisch isoliert ist. Der Frequenzumrichter ragt in Motorlängsrichtung über den Zwischenkasten hinaus und trägt an diesem hinausragenden Abschnitt einen mit der Umgebungsluft (freie Atmosphäre) zusammenwirkenden Kühlkörper zur Luftkühlung der Leistungselektronik des Frequenzumrichters. Der Kühlkörper besteht im Wesentlichen aus den üblichen Kühlrippen oder aus Kühlstäben, die nur der Umgebungsluft ausgesetzt sind, ohne jedoch dabei einer irgendwie gesteuerten Luftführung ausgesetzt zu sein.

Die Aufgabe der Erfindung besteht in der Verbesserung eines Elektromotors der einleitend angeführten Art, dessen Klemmenkasten an seiner, dem Motorgehäuse zugekehrten Unterseite bei Vermeidung der Anwendung von Zwangsenergie äußerlich verbessert luftgekühlt wird.

Die Lösung dieser Aufgabe ist in dem Anspruch 1 angeführt.

Mit dieser Lösung wird erreicht, dass die Unterseite des Klemmenkastens, die einen gewissen Abstand von dem Motorgehäuse aufweist, durch mehrere natürliche und ausgeprägte Luftströme wirksam gekühlt wird, wobei sich diese Luftströme zwischen den kanalbildenden Rippen von unten nach oben bewegen. Die zwischen den Rippen von unten nach oben hindurch strömenden Kühlluftströme erreichen eine erhöhte Strömungsgeschwindigkeit durch diejenige Wärme, die sowohl von der Außenseite des Motorgehäuses als auch von der Unterseite des Klemmenkastens zu den durch die Rippen gebildeten Strömungskanälen gelangt. Durch die Ausbildung von Kühlkanälen in einer senkrechten und quer zur Motor- welle verlaufenden Richtung kann somit eine beträchtliche natürliche Luftkühlung des Klemmenkastens an seiner Unterseite erzielt werden, so dass eine Zwangskühlung mit Hilfe einer Lüftereinrichtung, welche zusätzliche Herstellungskosten bedingt und Antriebsenergie verbraucht, vermieden ist. Da das Herstellen von Kühlluft führenden Kanälen mittels an der Unterseite des Klemmenkastens durch Spritzgießen des Klemmenkastens mitgeformter Rippen kostengünstig durchgeführt werden kann, ist die erfindungsgemäße Ausbildung des Klemmenkastens mit geringen Mehrkosten erreichbar.

Eine vorteilhafte Weiterbildung des Elektromotors besteht darin, dass sich der Klemmkasten um etwa den halben Umfang des Motorgehäuses erstreckt. Auf diese Weise wird erreicht, dass sich eine relativ starke Konvektionsströmung zwischen den kanalbildenden Rippen des Klemmenkastens ausbilden kann, wodurch eine erhöhte Kühlungsleistung erzielt wird.

Eine weitere vorteilhafte Ausgestaltung des Elektromotors besteht darin, dass der Klemmenkastenboden eine Durchbrechung aufweist, in der eine Wärmeleitplatte (heat spreader) angeordnet ist, die bzw. der einerseits wärmeleitend mit der Leistungselektronik des Frequenzumrichters und andererseits kraftschlüssig und wärmeleitend mit einer Anlagefläche des Motorgehäuses verbunden ist. Auf diese Weise ist der Klemmenkasten so weiter gebildet, dass die an sich bekannte Abfuhr der Wärme von der Leistungselektronik über das Motorgehäuse an den durch den Motor zu Kühlzwecken strömenden Anteil des Fördermediums auch hier zusätzlich angewendet werden kann.

Die Erfindung ist nachstehend anhand eines in den anliegenden Zeichnungen dargestellten Ausführungsbeispieles näher erläutert. Es zeigen:
- Fig. 1:: eine perspektivische Darstellung eines Elektromotors mit einem beispielsweisen Klemmenkasten,
- Fig. 2:: den Klemmenkasten nach Fig. 1 in einer anderen perspektivischen Darstellung und
- Fig. 3:: eine Schnittdarstellung nach der Linie III - III in Fig. 1, jedoch um 90° nach oben versetzt.

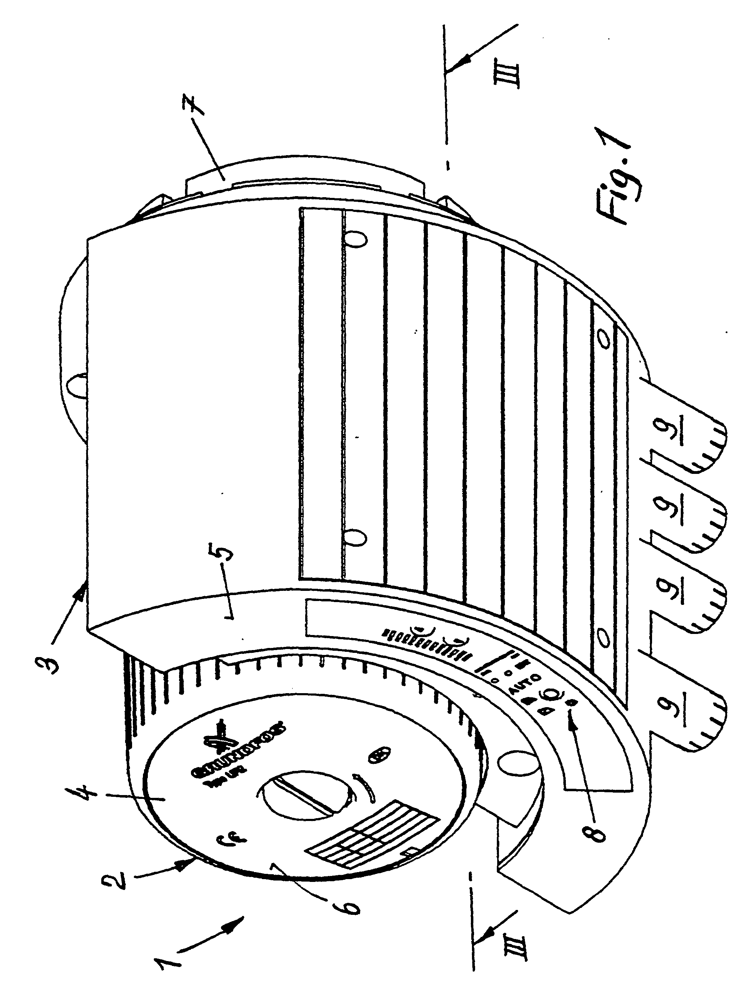

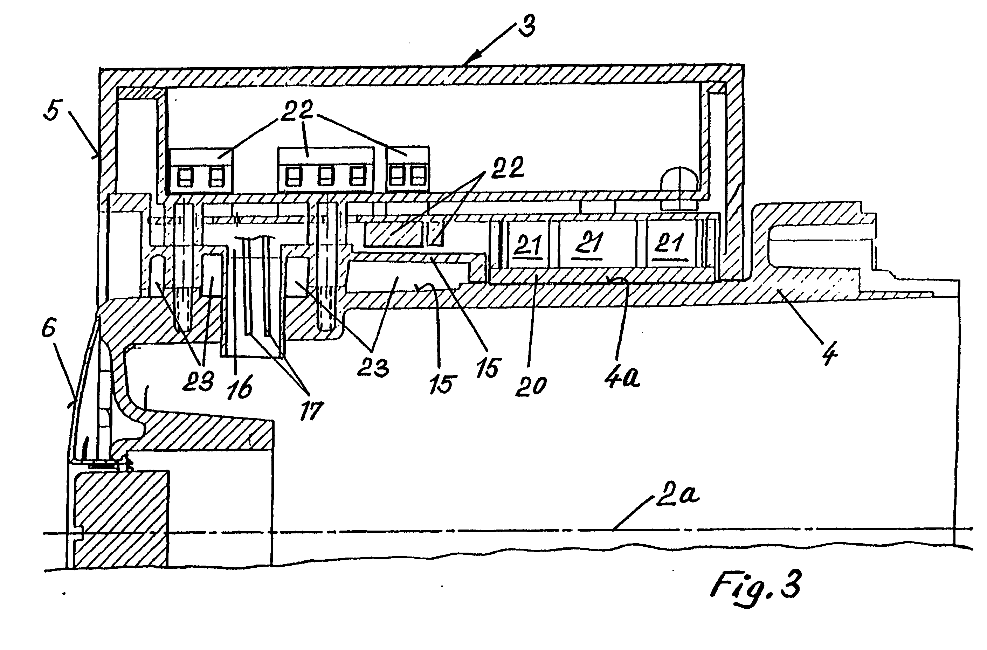

Nach Fig. 1 weist ein allgemein mit 1 bezeichnetes Kreisefpumpenaggregat für eine Heizungsanlage, einen Elektromotor 2, und zwar einen Nasslaufmotor, mit einem Klemmenkasten 3 auf. Das Aggregat 1 wird in der Regel so installiert, dass sich die Antriebswelle des Motors 2 (in Fig. 1 nicht zu erkennen) in einer im Wesentlichen waagerechten Lage befindet, welche Lage durch Fig. 1 angedeutet sein soll. Die sinnbildlich in Fig. 3 mit 2a angedeutete Motorwelle dient gleichzeitig auch als Pumpenwelle, weil sie das Pumpenlaufrad trägt. In Fig. 1 ist weiter zu erkennen, dass das Gehäuse 4 des Motors 2 in einer Ebene quer zu der genannten Motor- und Pumpenwelle 2a eine im Wesentlichen runde Außenkontur aufweist. An dem Motorgehäuse ist der Klemmenkasten 3 mit Abstand befestigt und enthält in üblicher Weise neben anderen elektrischen Teilen auch einen Frequenzumformer mit einer Leistungselektronik.

Gemäß Fig. ist der Klemmenkasten 3 bogenförmig gestaltet, derart, dass er sich in Form eines Kreisbogens beispielsweise etwa um den halben Umfang des in einer Ebene quer zur Motorwelle im wesentlichen eine runde Außenkontur aufweisenden Motorgehäuses 4 erstreckt. Seine axiale Länge ist vorzugsweise so gewählt, dass sich die Länge des Klemmenkastens im Wesentlichen über die gesamte Länge des Motorgehäuses 4 erstreckt. Hierdurch ist ein Klemmenkasten 3 geschaffen, der einen großen bogenförmigen Innenraum zur Verfügung stellt, so dass viele elektrische Bauteile einschließlich ihrer Verdrahtung und der Frequenzumrichter darin untergebracht werden können, wobei der Klemmenkasten auf seiner Unterseite, d. h. auf der derjenigen Seite, die dem Motorgehäuse zugekehrt ist, auf natürliche Weise sehr effektiv ekühlt werden kann, wie noch klar wird.

Des Weiteren ist der Klemmenkasten 3 so an dem Motorgehäuse 4 befestigt, dass die eine Stirnseite 5 des Kfem enkastens 3 der freien Stirnseite 6 des Motorgehäuses 4 gegenüberliegt, wie es insbesondere aus Fig. 3 deutlich zu erkennen ist. Die freie Stimseite des Motorgehäuses ist diejenige Seite, die der Montageseite 7 des Motors 2 axial abgekehrt ist. Auf seiner Stirnseite 5 kann der Klemmenkasten 3 mit einer Anzahl von Anzeigeund/oder Bedienelementen, die allgemein mit 8 angedeutet sind, versehen sein. Mit diesen Elementen 8 wird der Jeweils gewünschte Betriebszustand des Motors 2 in herkömmlicher Weise eingestellt und/oder angezeigt.

Der Klemmenkasten 3 ist vorzugsweise mit mehreren Kabelanschlussstutzen 9 versehen, durch welche elektrische Anschlusskabel (nicht gezeigt) hindurchgeführt werden.

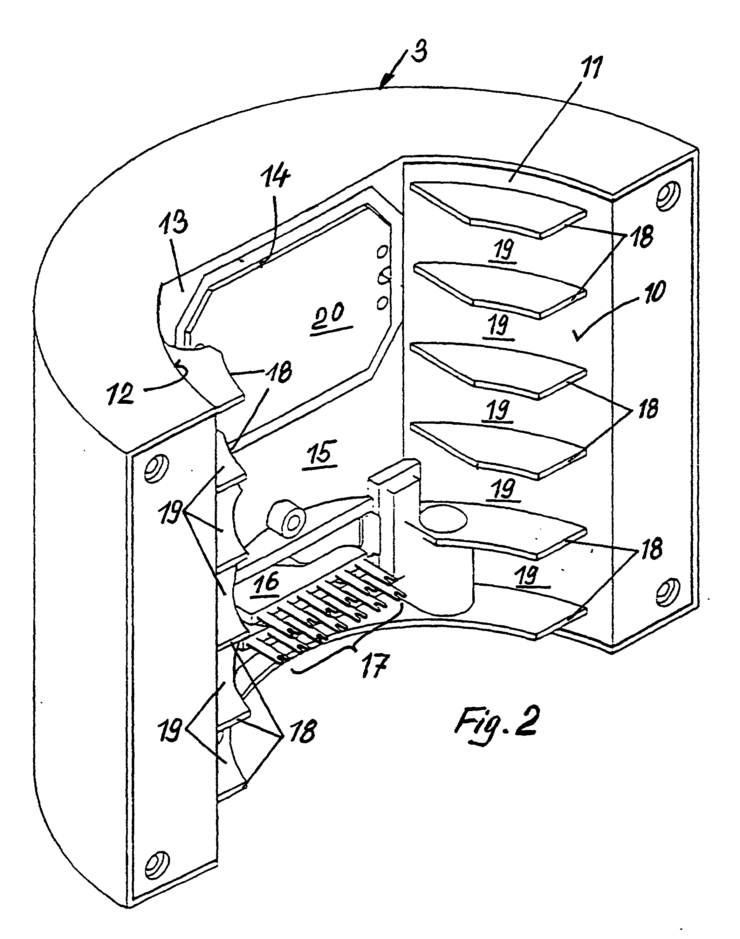

Wie es am besten aus Fig. 2 zu erkennen ist, ist die Unterseite 10 des Klemmenkastens 3 zumindest abschnittsweise an die runde Außenkontur des Motorgehäuses 4 angepasst. Im vorliegenden Ausführungsbeispiel sind zwei kreisbogenförmige Abschnitte 11 und 12 vorgesehen, die sich an den Längsröndem des Klemmenkastens 3 erstrecken. Im Mittelbereich der Unterseite 10 ist endseits ein ebener Teilbereich 13 vorgesehen, der eine größere Durchbrechung 14 aufweist. Der übrige mittlere Wandbereich 15 der Unterseite 10 des Klemmenkastens 3 ist wiederum so geformt, dass dieser Wandbereich bei montiertem Klemmenkasten von dem Motorgehäuse 4 beabstandet ist. Der Wandbereich 15 weist eine Durchbrechung 16 auf, durch welche sich die üblichen elektrischen Anschlussstifte 17 erstrecken, die in bekannter Weise zum elektrischen Anschluss der Statorwicklung des Elektromotors 2 mit der elektrischen Einrichtung in dem Klemmenkasten 3 bestimmt sind.

Wie es aus Fig. 2 deutlich zu erkennen ist, sind die Abschnitte 11 and 12 der Unterseite 10 des Klemmenkastens 3 mit einer Mehrzahl von Rippen 18 versehen, die quer zur Motor- und Pumpenwelle 2a verlaufen. Diese Rippen sind voneinander beabstandet und bilden zwischen sich Strömungskanäle 19 aus. Durch diese Strömungskanäle entsteht ein natürlicher Luftstrom in vertikaler Richtung um das Motorgehäuse 4, wenn der Motor in Betrieb ist und somit Verlustwärme sowohl im Motor als auch im Klemmenkasten entsteht.

In der Durchbrechung 14 des Wandbereichs 13 des Klemmenkastens 3 befindet sich eine Wärmeleitplatte 20, auch *"heatspreader"* genannt. Auf ihrer dem Motorgehäuse 4 abgekehrten Seite trägt die Wärmeleitplatte 20 gemäß Fig. 3 die Leistungselektronik 21 eines in dem Klemmenkasten 3 vorgesehenen Frequenzumrichters (nicht weiter dargestellt). Die relativ hohe Verlustwärme der Leistungselektronik wird somit direkt auf die Wärmeleitplatte übertragen. Da das Motorgehäuse 4 im Bereich der Wärmeleitplatte mit einer Planfläche 4a versehen ist und die Wärmeleitplatte direkt auf dieser Planfläche aufliegt, wird die Verlustwärme der Leistungselektronik 21 direkt auf das Motorgehäuse 4 übertragen. Von dort wird die Verlustwärme von dem durch den Motor 2 hindurch geförderten Flüssigkeitsanteil abgeführt, der in üblicher Weise zur Kühlung des Motorstators durch den Motor hindurch geleitet wird. Die Wärmeleitplatte 20 ist kraftschlüssig mit dem Motorgehäuse 4 verbunden, indem der Klemmenkasten 3 an dem Motorgehäuse 4 angeschraubt ist. Auf diese Weise ist ein guter Kontakt zwischen der Wärmeleitplatte 20 und der plonen Anlagefläche 21 des Motor-gehäuses 4 gegeben.

Wie bereits erwähnt ist, befinden sich in dem Klemmenkasten 3 die üblichen elektrischen Bauteile zum Anschluss und zur Steuerung des das Pumpenlaufrad tragenden Elektromotors 2, wobei die entsprechenden elektrischen Anschlusskabel über die Stutzen 9 in den Klemmenkasten 3 eingeführt und dort mit den entsprechenden elektrischen Bauteilen verbunden werden. Da der Aufbau der elektrischen Bauteile in dem Klemmenkasten 3 sowie die darin vorgesehene Verdrahtung nicht Gegenstand der vorliegenden Anmeldung sind, erübrigt sich deren Erläuterung.

Obgleich die Wärmeleitplatte 20, auf welcher die Leistungselektronik 21 des Frequenzumrichters in dem Klemmenkasten 3 montiert ist, einen bestimmten Bereich des Motorgehäuses 4 von der umfangsmäßigen Luftkühlung ausnimmt, wird trotzdem eine unterseitige Luftkühlung des Klemmenkastens in Folge der durch die Rippen 18 gebildeten Strömungs-kanäle 19 gewährleistet, da der übrige und größere Mittelabschnitt der Unterseite 10 des Klemmenkastens durch die natürliche vertikale Umfangsluftströmung gekühlt wird. Der diesbezügliche Strömungsbereich ist in Fig. 3 durch die quer zur Motor- und Pumpenwelle 2a verlaufenden Strömungskanäle 23 angedeutet. Selbstverständlich ist es auch möglich, in dem Klemmenkosten 3 einen Frequenzumrichter mit einer Leistungselektronik fortzulassen. In diesem Fall ist die gesamte Unterseite 10 des Klemmenkastens mittels umfangsmäßig durchgehender Rippen 18 so gestaltet, dass im Wesentlichen der gesamte Zwischenraum zwischen dem Motorgehäuse 4 und der Unterseite 10 des Klemmenkastens 3 für den Durchlass eines natürlichen, auf Konvexionsbasis beruhenden Kühlluftstromes zur Verfügung steht. Des weiteren ist der mit dem vorstehend beschriebenen Klemmkasten versehene Elektromotor nicht auf die Anwendung bei Kreiselpumpen beschränkt, sondern kann beispielsweise auch für den Antrieb von Kühlkompressoren verwendet werden.

## Patentansprüche

1. Elektromotor (2) für insbesondere eine Kreiselpumpe (1) für eine Heizungsanlage, wobei der Motor, der zu seinem Betrieb mit seiner Welle (2a) im Wesentlichen waagerecht verlaufend angeordnet wird, mit einem Motorgehäuse (4), dass in einer Ebene quer zu der Welle (2a) eine im Wesentlichen runde Außenkontur aufweist, und mit einem an dem Motorgehäuse angeordneten Klemmenkasten (3), der auch eine wärmeabgebende Leistungselektronik und an seiner dem Motorgehäuse zugekehrten Unterseite (10) Strömungskanäle (19) für Kühlluft bildende Rippen (18) aufweist, versehen ist, **dadurch gekennzeichnet, dass** der Elektromotor (2) ein zwangskühlungsfreier Motor ist, dass die dem Motorgehäuse (4) zugekehrte Unterseite (10) des Klemmenkastens (3) zumindest abschnittsweise bogenförmig an die runde Außenkontur des Motorgehäuses angepasst ist und in diesem Bereich die Kühlluft führenden Rippen (18) aufweist und dass der Klemmenkasten (3) so an dem Motor gehäuse (4) angeordnet ist, dass die Rippen (18) mit Bezug auf den Längsverlauf der Welle (2a) des Motors (2) quer zu dieser Welle verlaufen, so dass sich eine natürliche, in Umfangsrichtung des Motorgehäuses im Wesentlichen von unten nach oben verlaufen de Konvektionskühlluftströmung zwischen dem Klemmenkasten (3) und dem Motorgehäuse (4) einstellt.

2. Elektromotor nach Anspruch 1, **dadurch gekennzeichnet, dass** sich der Klemmenkasten (3) um etwa den halben Umfang des Motorgehäuses (4) erstreckt.

3. Elektromotor nach Anspruch 1 oder 2, **dadurch gekennzeichnet, dass** der Klemmenkastenboden (13) eine Durchbrechung (14) aufweist, in der eine Wärmeleitplatte (20) vorgesehen ist, die einerseits wärmeleitend mit der Leistungselektronik (21) und andererseits kraftschlüssig und wärmeleitend mit einer Anlagefläche (4a) des Motorgehäuses (4) verbunden ist.

4. Elektromotor nach einem der vorstehenden Ansprüche, **dadurch gekennzeichnet, dass** sich der Klemmenkasten (3) über die ganze Länge des Motorgehäuses (4) erstreckt.

5. Elektromotor nach einem der vorstehenden Ansprüche, **dadurch gekennzeichnet, dass** der Klemmenkasten (3) eine Stirnseite (5) aufweist, die neben der freien Stirnseite (6) des Motorgehäuses (4) angeordnet ist und welche Anzeige- und/oder Bedienelemente (8) des Motors (1) trägt.

## Claims

1. An electric motor (2), in particular for a centrifugal pump (1) for a heating installation, wherein the motor, which for its operation is arranged with its shaft (2a) running essentially horizontally, is provided with a motor housing (4) which in a plane transverse to the shaft (2a) has an essentially round outer contour, and with a terminal box (3) which is arranged on the motor housing and which also has heat-dissipating power electronics and ribs (18) forming flow channels (19) for cooling air on its lower side (10) facing the motor housing (4), **characterised in that** the electric motor (2) is a motor free of forced (air) cooling, that the lower side (10) of the terminal box (3), which faces the motor housing (4), at least in sections is adapted in an arc-shaped manner to the round outer contour of the motor housing and in this region comprises the ribs guiding the cooling air and that the terminal box (3) is arranged on the motor housing (4) such that the ribs (18) with respect to the longitudinal course of the shaft (2a) of the motor (2) run transversely to this shaft so that a natural convectional cooling air flow sets in between the terminal box (3) and the motor housing (4), which runs in the peripheral direction of the motor housing essentially from bottom to top.

2. An electric motor according to claim 1, **characterised in that** the terminal box (3) extends roughly around half the periphery of the motor housing (4).

3. An electric motor according to claim 1 or 2, **characterised in that** the terminal box base (13) comprises an opening (14) in which a heat conduction plate (20) is provided which on the one hand is connected to the power electronics (21) in a heat-conducting manner and on the other hand is connected to a contact surface (4a) of the motor housing (4) with a non-positive fit and in a heat-conducting manner.

4. An electric motor according to one of the preceding claims, **characterised in that** the terminal box (3) extends over the whole length of the motor housing (4).

5. An electric motor according to one of the preceding claims, **characterised in that** the terminal box (3) comprises an end-face (5) which is arranged next to the free end-face (6) of the motor housing and which carries the display and/or operating elements (8) of the motor (1).

## Revendications

1. Moteur électrique (2) pour, en particulier, une pompe centrifuge (1) destiné à une installation de chauffage, disposé sensiblement horizontalement pour son fonctionnement avec son arbre (2a), et équipé d'un carter moteur (4) de contour extérieur sensiblement rond dans un plan transversal à l'arbre (2a), et d'un bornier (3) disposé sur le carter moteur, lequel bornier présente également une électronique de puissance dissipant de la chaleur et des nervures (18) formant des canaux d'écoulement (19) pour l'air de refroidissement sur son côté inférieur (10) tourné vers le carter moteur, **caractérisé en ce que** ledit moteur électrique (2) est un moteur sans refroidissement forcé, **en ce que** le côté inférieur (10) tourné vers le carter moteur (4) du bornier (3) est adapté au moins par endroits, en forme d'arc, au contour extérieur rond du carter moteur et présente les nervures (18) guidant l'air de refroidissement dans cette zone, et **en ce que** le bornier (3) est disposé sur le carter moteur (4), de telle sorte que les nervures (18) sont agencées, par rapport au tracé longitudinal de l'arbre (2a) du moteur (2), transversalement à cet arbre, afin qu'un courant d'air de refroidissement de convection naturel, allant dans le sens périphérique du carter moteur sensiblement du bas vers le haut, s'établisse entre le bornier (3) et le carter moteur (4).

2. Moteur électrique selon la revendication 1, **caractérisé en ce que** le bornier (3) s'étend autour d'environ la demi-périphérie du carter moteur (4)

3. Moteur électrique selon la revendication 1 ou 2, **caractérisé en ce que** le fond du bornier (13) présente une ouverture (14) dans laquelle est prévue une plaque conductrice de chaleur (20) qui est reliée, d'une part, de façon thermoconductrice à l'électronique de puissance (21) et, d'autre part, de façon adhérente et thermoconductrice à une surface d'appui (4a) du carter moteur (4).

4. Moteur électrique selon l'une quelconque des revendications précédentes, **caractérisé en ce que** le bomier (3) s'étend sur toute la longueur du carter moteur (4).

5. Moteur électrique selon l'une quelconque des revendications précédentes, **caractérisé en ce que** le bomier (3) présente une face avant (5), qui est disposée à côté de la face avant (6) libre du carter moteur (4) et qui porte des éléments d'affichage et/ou de commande (8) du moteur (1).
